(19) Europäisches Patentamt / European Patent Office / Office européen des brevets

(11) **EP 4 024 733 A1**

(12) **EUROPEAN PATENT APPLICATION**
published in accordance with Art. 153(4) EPC

(43) Date of publication:
**06.07.2022 Bulletin 2022/27**

(21) Application number: **20869458.8**

(22) Date of filing: **07.08.2020**

(51) International Patent Classification (IPC):
**H04B 17/30** $^{(2015.01)}$    **H04W 24/02** $^{(2009.01)}$

(52) Cooperative Patent Classification (CPC):
**H04B 17/30; H04W 24/02; H04W 64/00**

(86) International application number:
**PCT/CN2020/107892**

(87) International publication number:
**WO 2021/057284 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.09.2019  CN 201910904197**

(71) Applicant: **ZTE Corporation**
**Shenzhen, Guangdong 518057 (CN)**

(72) Inventors:
• **GUO, Weili**
  **Shenzhen, Guangdong 518057 (CN)**
• **LIU, Guochao**
  **Shenzhen, Guangdong 518057 (CN)**

(74) Representative: **Raynor, Simon Mark**
**Murgitroyd & Company Milton Keynes**
**Studio H1B**
**297 Upper Fourth Street**
**Witan Studios**
**Milton Keynes MK9 1EH (GB)**

(54) **METHOD AND DEVICE FOR IDENTIFYING SIGNAL INTERFERING POSITION, ELECTRONIC DEVICE, AND STORAGE MEDIUM**

(57) Embodiments of the present disclosure relate to the field of communications, and disclose a method and an apparatus for identifying a signal interference position, an electronic device, and a storage medium. In the present disclosure, energy of a resource block detected in each of three-dimensional subspace is obtained, where the three-dimensional subspaces are obtained by dividing a three-dimensional space in advance. It is detected whether there is energy greater than a preset threshold among acquired energy. In response to there being the energy greater than the preset threshold, three-dimensional subspace corresponding to the energy greater than the preset threshold is acquired. The signal interference position is determined according to the acquired three-dimensional subspace.

FIG. 1

EP 4 024 733 A1

**Description**

**CROSS REFERENCE TO RELATED APPLICATIONS**

The present disclosure is filed based on Chinese Patent Application No. 201910904197.4 filed on September 24, 2019 and claims priority to this Chinese Patent Application, which is incorporated by reference herein in its entirety.

**TECHNICAL FIELD**

Embodiments of the present disclosure relate to the field of communications, and in particular to a technology for identifying a signal interference position.

**BACKGROUND**

Signal interferences for a base station system may be classified into intra-system interferences and inter-system interferences according to a source of the signal interferences. A base station includes a transmitting system and a receiving system, an ideal filter which can limit transmitting signals and receiving signals to an operating frequency configured by the base station does not exist, so there may be a leakage of the transmitting signals to other operating frequencies. The receiving system of the base station may receive signal powers in other frequencies on a specified operating frequency, which may affect normal service of the base station and result in the inter-system interferences.
The inter-system interferences may lead to network problems such as mobile phone user access failures, dropped calls, or handover failures during movement. Once such problems occur, operation and maintenance personnel of the base station need to troubleshoot and solve these problems. A common method used by the operation and maintenance personnel of the base station to eliminate interferences is: first confirm whether the interferences are the intra-system interferences; if the intra-system interferences are excluded, the interferences are the inter-system interferences.
However, the inventor of the present disclosure finds that, for eliminating the inter-system interferences, the first thing to do is to find out where the interferences come from, and to find possible interference sources from a mass of stations. The common method is that the operation and maintenance personnel carry a frequency scanner and a yagi antenna to the station to find the interference sources. Due to a large number of commercial stations and no definite directions and scopes, it is time-consuming and laborious to check the stations one by one. Moreover, sometimes there is interference from a pseudo base station and the interference source is not in a target stations list. In this case, checking the stations one by one is in vain, resulting in a failure of identifying a correct signal interference source.

**SUMMARY**

The purpose of embodiments of the present disclosure is to provide a method and an apparatus for identifying a signal interference position, an electronic device, and a storage medium.
Some embodiments of the present disclosure provide a method for identifying a signal interference position, including: acquiring energy of a resource block detected in each of three-dimensional subspaces respectively; where the three-dimensional subspaces are obtained by dividing a three-dimensional space in advance; detecting whether there is energy greater than a preset threshold among acquired energy; in response to there being the energy greater than the preset threshold, acquiring a three-dimensional subspace corresponding to the energy greater than the preset threshold; determining a signal interference position according to acquired three-dimensional subspace.
Some embodiments of the present disclosure further provide an apparatus for identifying a signal interference position, including: an energy acquisition module, configured to acquire energy of a resource block detected in each of three-dimensional subspaces respectively; where the three-dimensional subspaces are obtained by dividing a three-dimensional space in advance; a detection module, configured to detect whether there is energy greater than a preset threshold among acquired energy; a three-dimensional subspace acquisition module, configured to acquire a three-dimensional subspace corresponding to the energy greater than the preset threshold in response to the energy greater than the preset threshold being detected by the detection module; a position determination module, configured to determine a signal interference position according to acquired three-dimensional subspaces.
Some embodiments of the present disclosure further provide an electronic device, including: at least one processor; and a memory communicatively connected to the at least one processor; where the memory stores instructions executable by the at least one processor, and the at least one processor implements, when executing the instructions, the method for identifying the signal interference position.
Some embodiments of the present disclosure further provide a computer-readable storage medium storing a computer program that, when executed by a processor, causes the processor to implement the method for identifying the signal interference position.

## BRIEF DESCRIPTION OF THE DRAWINGS

One or more embodiments are exemplarily illustrated by reference to the pictures in the corresponding accompanying drawings, and these exemplary descriptions do not constitute limitations on the embodiments.

FIG. 1 is a flowchart of a method for identifying a signal interference position according to a first embodiment of the present disclosure;
FIG. 2 is a schematic diagram of a division of a scanning space according to the first embodiment of the present disclosure;
FIG. 3 is a schematic diagram of a wave path difference and a steering vector according to the first embodiment of the present disclosure;
FIG. 4 is a schematic diagram of a dual-polarized antenna according to the first embodiment of the present disclosure;
FIG. 5 is a flowchart of a method for identifying a signal interference position according to a second embodiment of the present disclosure;
FIG. 6 is a schematic structural diagram of an apparatus for identifying a signal interference position according to a third embodiment of the present disclosure;
FIG. 7 is a schematic structural diagram of an electronic device according to the third embodiment of the present disclosure.

## DETAILED DESCRIPTION

In order to make the purpose, the technical solution and the advantages of embodiments of the present disclosure clearer, various embodiments of the present disclosure will be described in detail below with reference to the accompanying drawings. However, those of ordinary skill in the art may understand that, in the various embodiments of the present disclosure, many technical details are provided for readers to better understand the present disclosure. However, even without these technical details and various changes and modifications based on the following embodiments, the technical solution claimed in the present disclosure may be realized. The following division of the various embodiments is for the convenience of description, and should not constitute any limitation on the specific implementation of the present disclosure, and the various embodiments may be combined with each other and referred to each other on the premise of no contradiction.

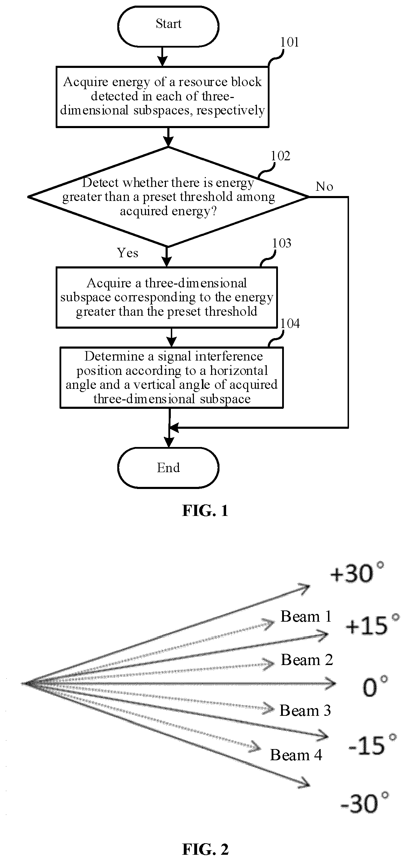

A first embodiment of the present disclosure relates to a method for identifying a signal interference position, which is applied to a base station. In this embodiment, energy of a resource block detected in each of three-dimensional subspaces is acquired, where the three-dimensional subspaces are obtained by dividing a three-dimensional space in advance. It is detected whether there is energy greater than a preset threshold among acquired energy. In response to there being the energy greater than the preset threshold, a three-dimensional subspace corresponding to the energy greater than the preset threshold is acquired. The signal interference position is determined according to acquired three-dimensional subspace. By dividing the three-dimensional space in advance, signals are received in different spaces with beams in different directions, and energy value of each of the subspaces is calculated to determine whether there is interference and determine a spatial position of an interference source. In this way, a position of a signal interference source can be accurately located and there is no need to manually check the interference sources one by one at the stations, thereby manpower can be saved and efficiency of detection of signal interference positions can be improved. The implementation details of the method for identifying the signal interference position in this embodiment are described below in detail. The following content is about implementation details provided only for the convenience of understanding, and is not necessary for implementing this solution. The specific process is shown in FIG. 1.

In operation 101, the energy of the resource block detected in each of the three-dimensional subspaces is acquired.

Specifically, in order to automatically identify the spatial position of the signal interference source of the base station, in this embodiment, the three-dimensional space is divided in advance to obtain the three-dimensional subspaces. That is, a DOA (direction of arrival) scanning space is divided into X subspaces in a horizontal direction and Y subspaces in a vertical direction, then a total of X*Y=Z subspaces can be obtained. Taking the vertical direction as an example, a coverage range is - 30° to 30° , which may be equally divided into 4 sectors. Four scanning beams point in directions of bisectrices of the sectors, respectively, as shown by dotted arrows in FIG. 2, , so a scanning angle is $\theta$=-22.5°:15°:22.5°. In this operation, the energy of the resource block in each of the Z subspaces is acquired.

In a specific example, a three-dimensional coordinate system is constructed, with a center of a base station antenna panel as an origin, and a base station antenna coordinate P(m, n) is constructed as:

$$P_{m,n} = \begin{bmatrix} 0 \\ (n-1)dH \\ (m-1)dV \end{bmatrix}, n \in [1:N], m \in [1:M]$$

where dH represents a sub-spacing of horizontal array elements, dV represents a sub-spacing of vertical array elements, n represents a number of columns of an antenna array, m represents a number of rows of the antenna array, and P(m, n) represents an antenna position on m-th row and n-th column.

A phase difference Vm,n in each of the three-dimensional subspaces is calculated according to the base station antenna coordinates:

$$v_{m,n}(\theta, \varphi) = \exp\left[j\frac{2\pi d(\theta,\varphi)}{\lambda}\right]$$
$$= \exp\left[j\frac{2\pi}{\lambda}(\cos(\theta)(m-1)dV + \sin(\theta)\sin(\varphi)(n-1)dH)\right]$$

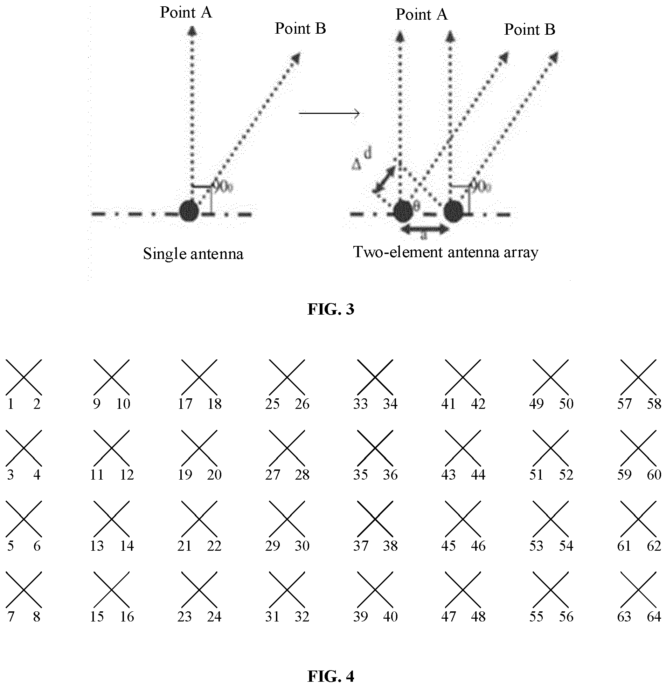

where d ($\theta$, $\varphi$) represents a wave path difference, and j represents an imaginary unit (for example, a number in a form of z=a+b*j is called a complex number, where a is called as a real part, b is called as an imaginary part, and j is called as the imaginary unit); $\lambda$ represents a wavelength, $\theta$ represents a vertical angle index, and $\varphi$ represents a horizontal angle index. The wave path difference indicates that beams in a specific direction travel different distances when they arrive at different antenna array elements, the different distances determine that the phase differences are also different. As shown in FIG. 3, for a single antenna, the wave path differences of the beams in the specific direction when they arrive at the antenna are always 0. While for a two-element antenna array on the right side of FIG. 3, the wave path differences of the beams in the specific direction when they arrive at antenna 1 and antenna 2 are different, so the phase differences are also different. A vector formed by phase differences is called as a steering vector. As shown in FIG. 3, the wave path difference at point A is $\Delta d = 0$; the phase difference at point A is $\Delta_\varphi = 0$; the wave path difference at point B is $\Delta d = a * \cos\theta$; the phase difference at point B is $\Delta\varphi = 2\pi\Delta d/\lambda$. Therefore, the steering vector in each of the three-dimensional subspaces may be obtained, by the following formula, according to the phase difference Vm,n in each of the three-dimensional subspaces:

$$a(\theta, \varphi) = \left\{v_{1,1}, v_{2,1}, \ldots, v_{M,1}, v_{1,2}, v_{2,2}, \ldots, v_{M,2}, \ldots\ldots, v_{1,N}, v_{2,N}, \ldots, v_{M,N}\right\}$$

The phase difference is obtained by constructing the base station antenna coordinates and calculation based on the wave path differences, and steering vector in each of the three-dimensional subspaces is obtained based on the phase difference. In this way, the implements according to the present disclosure can be flexibly applied without being limited by application scenarios.

In this embodiment, a power of the resource block detected in each of the three-dimensional subspaces may be calculated according to the following formula:

$$CorVal(\theta, \varphi, rbIdx) = abs(a * NI^*)^2 = abs\left(\sum_{antidx=1}^{antNum} a^*_{(\varphi,\theta,antidx)} \bullet NI_{(rbIdx,antidx)}\right)^2$$

where, *rbIdx* represents a resource block index, $\theta$ represents the vertical angle index, $\varphi$ represents the horizontal angle index, NI represents a noise sequence of the resource block, antidx represents an antenna index, antNum represents a total number of antennas, and a represents the steering vector of a three-dimensional subspace.

Through the above formula, the energy of the resource block in each of the three-dimensional subspaces may be accurately acquired.

In operation 102, it is detected whether there is the energy greater than the preset threshold among the acquired energy. When there is the energy greater than the preset threshold, it means that there is the interference source and a direction of the interference source is dependent on the three-dimensional subspace corresponding to the energy greater than the preset threshold, and operation 103 is performed. When there is no energy greater than the preset threshold, it means that there is no interference source, and this process is ended. The preset threshold may be set according to an empirical value, and no specific example is given here. In practical applications, when there are multiple energy values greater than the preset threshold, a direction corresponding to the largest energy may be determined as a direction of incoming beams of the interference source, that is,

$$(\theta_0, \varphi_0) = \arg_{(\theta,\varphi)} \max(f(\theta, \varphi))$$
$$f(\theta, \varphi) = abs\left(a^* * NI\right)^2$$

In operation 103, the three-dimensional subspace corresponding to the energy greater than the preset threshold is acquired. The wave path differences of the beams in the specific direction when they arrive at different antennas are different, resulting in different phase differences, which in turn lead to different energy generated by the interference source in different three-dimensional subspaces. Therefore, in this operation, a channel is correlated with the steering vector according to pre-stored steering vectors of the three-dimensional subspaces, to obtain the energy received in each of the three-dimensional subspaces. Matching is performed on the energy received in each of the three-dimensional subspaces and the energy greater than the preset threshold. A three-dimensional subspace corresponding to energy matched with the energy greater than the preset threshold is taken as the three-dimensional subspace corresponding to the energy greater than the preset threshold. That is, values of $\theta$ and $\varphi$ of the three-dimensional subspace corresponding to the energy greater than the preset threshold are obtained.

Next, in operation 104, the signal interference position is determined according to a horizontal angle and a vertical angle of the acquired three-dimensional subspaces.

In operation 101, the energy of the resource block in each of the three-dimensional subspaces has been obtained. In operation 102, it is determined whether there is interference, and the energy of the three-dimensional subspace affected by the interference, i.e. the energy greater than the preset threshold, is obtained. And in operation 103, the values of $\theta$ and $\varphi$ of the three-dimensional subspace with the energy greater than the preset threshold are deduced using the pre-stored steering vectors of the three-dimensional subspaces, in combination with the actually detected energy which is greater than the preset threshold. In this way, a direction in which the interference position is located can be determined quickly, and efficiency of detection of the interference position can be further improved. The present embodiment is described below with a specific example.

Taking a 4*8 dual-polarized antenna of a 5G base station shown in FIG. 4 as an example, the sub-spacing of the horizontal array elements is dH, the sub-spacing of the vertical array elements is dV, and the array elements are regularly arranged in a form of rectangle, assuming that the number of antennas is 64. Before identifying the signal interference position, a construction of a steering vector table is performed in advance. For example, a three-dimensional steering vector a($\theta$, $\varphi$, $ak_{Rx}$) has a dimension of X horizontal angles and Y vertical angles, and the number of antennas is 64, that is, this three-dimensional steering vector corresponds to a table of X*Y*64 complex numbers, where $\theta$ represents the vertical angle index, $\varphi$ represents the horizontal angle index, and $ak_{Rx}$ represents the antenna index. Fixed-point values of the steering vectors, taking a calibration Q (16,13) as an example, are stored in the steering vector table. A size of the entire file is X*Y*64, and the real part and the imaginary part are stored separately, i.e. 13 high-order bits for the real part, and 13 low-order bits for the imaginary part. A storage index order is the horizontal angle index first, followed by the vertical angle index, and finally the antenna index. The identification of the signal interference position is described below.

Taking 100M bandwidth as an example, NI represents the noise sequence of the resource block (RB), and the dimensions are a number of RB and a number of antennas, that is, 273*64. rbIdx represents the RB index, $\varphi$ represents the horizontal angle index, and $\theta$ represents the vertical angle index.

The pseudocodes relevant to energy are as follows:

$$for \; rbIdx = 1:17 \qquad \%$$

$$for \varphi = -52.5 : 15 : 52.5$$

$$for \theta = -22.5 : 15 : 22.5$$

$$CorVal(\theta, \varphi, rbIdx) = abs\left(a * NI^*\right)^2 = abs\left(\sum_{antidx=1}^{antNum} a^*_{(\varphi,\theta,antidx)} \bullet NI_{(rbIdx,antidx)}\right)^2$$

$$end$$

$$end$$

$$end$$

Specifically, $a* \bullet NI$ is calculated, for example a calibration of the steering vector $a^*_{(\theta,\varphi,ak_{Rx})}$ is Q(16,13), and a calibration of $NI$ ($rbIdx,ak_{Rx}$) is Q(16,15). Multiplication of complex numbers increases a bit width by 2 bits, and a calibration corresponding to a result of the multiplication is Q (32, 30). 64 numbers are accumulated with a carry of 6 bits, so a 40-bit accumulator is used in the calculation, and then the accumulated result is shifted to the right by 6+13 bits, which is represented by a calibration of Q (16,11):

$$CorVal_{(\theta,\varphi,rbIdx)} = \text{int } 16\left(\text{int } 40\left(\sum_{ka_{Rx}=0}^{antNum} a \bullet NI^*\right) >> 19\right)$$

where $CorrVal(\theta, \varphi, rbIdx)$ dimension corresponds to horizontal angle*vertical angle*the number of RB, and the total size corresponds to energy of a number of X*Y*273.

After acquiring the energy of the resource block in each of the three-dimensional subspaces, $abs(CorVal_{(\theta,\varphi,rbIdx)})^2$ is calculated. For example a calibration of $CorVal$ is Q(16,11), the complex number is squared with a carry of 2 bits, and a calibration Q(32,24) is obtained. Since $CorrVal(\theta, \varphi, rbIdx) = \text{int } 32(CorVal \times conj(CorVal))$ , values of $\theta$ and $\varphi$ in $CorrVal(\theta, \varphi, rbIdx)$greater than a preset interference threshold can be calculated. By setting an interference threshold Th, a situation that there is energy exceeding the interference threshold Th is determined to be a situation that interference exists. Position information of the interference source is calculated according to the horizontal angle and vertical angle information ($\theta, \varphi$), thereby an interference detection result is obtained and output.

In this embodiment, whether there is interference and the spatial position of the interference source is determined by dividing the three-dimensional space in advance, receiving signals in different spaces with beams in different directions, and calculating the energy value of each of the subspaces. In this way, the position of the signal interference source can be automatically located, and manpower can be replaced by an algorithm, without needing of manual check of the interference source one by one at stations, thereby the time cost of the operation and maintenance personnel of base stations to find the position of the interference sources can be saved, and efficiency of solving inter-system interference can be improved.

Moreover, the wave path differences of the beams in the specific direction when they arrive at different antennas are different, resulting in different phase differences, therefore the energy generated by the interference source in different three-dimensional subspaces is different. Channels are correlated with the pre-stored steering vectors of the three-dimensional subspaces, to obtain the energy of all the subspaces. And then the subspaces with energy greater than the preset threshold energy are found out in combination with the actually detected energy which is greater than the preset threshold. These subspaces are determined to be in correspondence to the direction of the interference source. In this way, the interference position can be quickly determined and the detection efficiency of the interference position can be further improved.

Since the three-dimensional subspaces are obtained by dividing the three-dimensional space, each of the three-dimensional subspaces corresponds to a horizontal angle and a vertical angle, and the signal interference position can be easily and effectively located according to the horizontal angle and the vertical angle.

A second embodiment of the present disclosure relates to a method for identifying a signal interference position. The second embodiment includes further improvement on the basis of the first embodiment, and the main improvement lies in that, in the second embodiment of the present disclosure, an abnormal signal source is further scanned and located by moving. Specifically, a signal-receiving source is moved by a preset distance in a direction of the three-dimensional subspace corresponding to energy greater than a preset threshold, and it is determined whether a moving direction is correct according to whether energy of a resource block in the three-dimensional subspace increases after moving. In response to the moving direction being correct, a current position is recorded as an optimal signal interference position, and moving is continually performed by the preset distance in the moving direction, and a process of determining whether the moving direction is correct according to whether the energy of the resource block in the three-dimensional subspace increases after moving is repeated. In response to the moving direction being incorrect, the moving direction is adjusted and the signal-receiving source is moved, and the process of determining whether the moving direction is correct according to whether the energy of the resource block in the three-dimensional subspace increases after the moving is repeated. The optimal signal interference position recorded is taken as the signal interference position. Herein, adjustment times of the moving direction are accumulated after each adjustment of the moving direction; accumulated adjustment times are cleared to zero in response to determining that the moving direction is correct. In response to the accumulated adjustment times reaching a preset adjustment threshold, an optimal signal interference position last recorded is taken as the signal interference position.

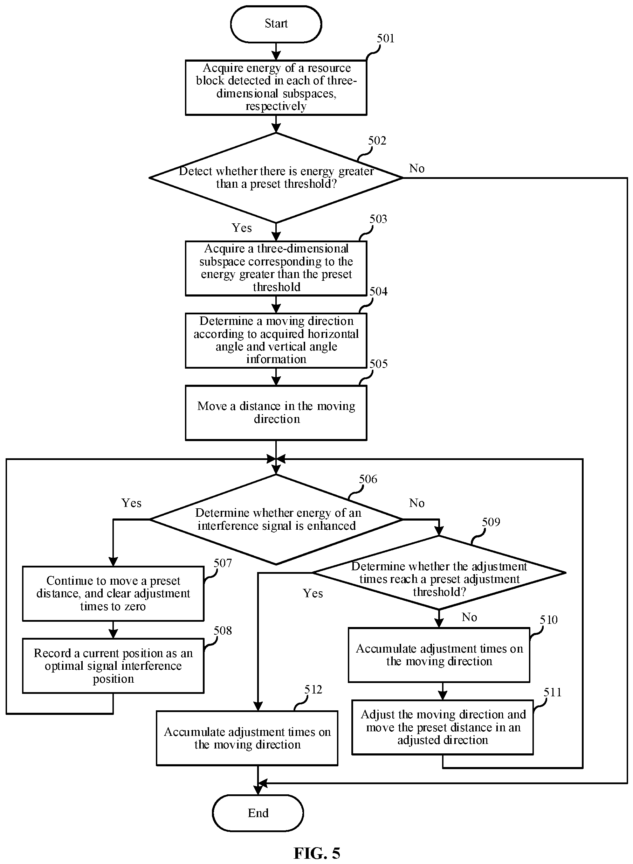

The specific process is shown in FIG. 5. In operation 501, the energy of the resource block detected in each of the three-dimensional subspaces is acquired. This operation is similar to operation 101 and will not be repeated here.

In operation 502, it is detected whether there is the energy greater than the preset threshold among the acquired energy. When there is the energy greater than the preset threshold, it indicates that there is an interference source, and a direction of the interference source is dependent on the three-dimensional subspace corresponding to the energy greater than the preset threshold, and then operation 503 is performed. When there is no energy greater than the preset threshold, it indicates that there is no interference source, and this process is ended. This operation is similar to operation 102 and will not be repeated here.

In operation 503, the three-dimensional subspace corresponding to the energy greater than the preset threshold is acquired, that is, values of $\theta$ and $\varphi$ of the three-dimensional subspace corresponding to the energy greater than the preset threshold are acquired. The specific acquisition method is similar to that in operation 103, and will not be repeated here.

In operation 504, the moving direction is determined according to horizontal angle and vertical angle information ($\theta$, $\varphi$) obtained in operation 503.

In operation 505, moving is performed by a distance in the moving direction, for example, moving by 10 meters.

In operation 506, it is determined whether energy of an interference signal is increased, that is, it is determined whether the energy of the resource block in the three-dimensional subspace is increased after moving. When the energy of the interference signal is enhanced, it indicates that the moving direction is correct, and operation 507 is performed; when the energy of the interference signal is weakened, it indicates that the moving direction is incorrect, and operation 509 is performed.

In operation 507, moving is continually performed by the preset distance in the correct moving direction, for example, continuing to move by 10 meters in the horizontal direction or to move by 10 meters in the vertical direction. The adjustment times of the moving direction is cleared to zero, and operation 508 is performed.

In operation 508, the current position is recorded as the optimal signal interference position, for example, horizontal and vertical coordinates of the current position are recorded as the optimal signal interference position. After operation 508, the process returns to operation 506.

When it is determined in operation 506 that the energy of the interference signal is not enhanced, it indicates that the moving direction is wrong, and then operation 509 is performed to determine whether the adjustment times reach a preset adjustment threshold. The preset adjustment threshold may be set according to an empirical value, for example, 10. In response to the adjustment times not reaching the preset adjustment threshold, operation 510 is performed; or in response to the adjustment times reaching the preset adjustment threshold, operation 512 is performed.

In operation 510, the adjustment times of the moving direction are accumulated, for example, the adjustment times of the moving direction are increased by 1, and operation 511 is performed.

In operation 511, the moving direction is adjusted, and moving is performed by the preset distance in an adjusted direction, and the process returns to operation 506 after moving.

In response to determining that the adjustment times have reached the preset adjustment threshold in operation 509, operation 512 is performed: the optimal signal interference position last recorded is taken as the signal interference position.

That is to say, in this embodiment, the values of $\theta$ and $\varphi$ of the three-dimensional subspace corresponding to the energy greater than the preset threshold is taken as a reference for the moving direction. Every time the signal-receiving source is moved by a certain distance, it is determined whether the energy of the interference signal is enhanced. When the energy of the interference signal is enhanced, it indicates that the moving direction is correct. The movement is continued along the correct moving direction, and at the same time, the adjustment times of the moving direction are cleared to zero, and the current position (horizontal coordinate, vertical coordinate) is recorded as the optimal position close to the interference source. When the energy of the interference signal is weakened, it indicates that the movement is not towards the interference source and the moving direction needs to be adjusted. The adjustment times may be set to no more than n. Before each adjustment, it is determined whether an upper limit of the adjustment times has been reached. In response to not reaching the upper limit of the adjustment times, the direction may be adjusted for one more time; in response to reaching the upper limit of the adjustment times, the optimal signal interference position recorded is taken as the position of the interference source.

In this embodiment, the three-dimensional subspace with the energy greater than the preset threshold is used as the reference for the moving direction, and the position of the interference source can be gradually approached by moving a signal-receiving source, thereby the position of the interference source can be further accurately located. Moreover, by setting a maximum value for the adjustment times, clearing the adjustment times to zero when the moving direction is correct, and accumulating the adjustment times when the moving direction is wrong, the accurate interference position can be quickly approached after limited times of adjustments.

The operations of the above various methods are divided only for the purpose of describing clearly. During implementation, multiple operations may be combined into one operation or a certain operation may be split into multiple operations. As long as the same logical relationship is included, they are all within the protection scope of the present disclosure. Adding insignificant modifications to the algorithm or process or introducing insignificant designs, but not changing the core design of the algorithm and process are all within the protection scope of the present disclosure.

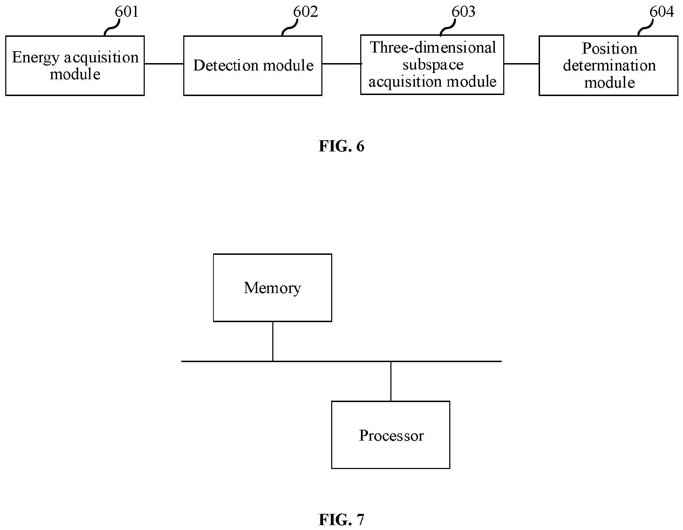

A third embodiment of the present disclosure relates to an apparatus for identifying a signal interference position, as shown in FIG. 6, including the following modules.

An energy acquisition module 601, configured to acquire energy of a resource block detected in each of three-dimensional subspaces, where the three-dimensional subspaces are obtained by dividing a three-dimensional space in advance.

A detection module 602, configured to detect whether there is energy greater than a preset threshold among acquired energy.

A three-dimensional subspace acquisition module 603, configured to acquire a three-dimensional subspace corresponding to the energy greater than the preset threshold in response to the energy greater than the preset threshold being detected by the detection module.

A position determination module 604, configured to determine a signal interference position according to acquired three-dimensional subspace.

In a specific example, the energy acquisition module 601 is specifically configured to calculate a power of the resource block detected in each of the three-dimensional subspaces according to the following formula:

$$CorVal(\theta, \varphi, rbIdx) = abs(a * NI^*)^2 = abs\left(\sum_{antidx=1}^{antNum} a^*_{(\varphi, \theta, antidx)} \bullet NI_{(rbIdx, antidx)}\right)^2$$

where, $rbIdx$ represents a resource block index, $\theta$ represents a vertical angle index, $\varphi$ represents a horizontal angle index, NI represents a noise sequence of the resource block, antidx represents an antenna index, antNum represents a total number of antennas, and a represents a steering vector of a three-dimensional subspace.

In a specific example, the steering vector of the three-dimensional subspace is constructed in the following way.

A three-dimensional coordinate system is constructed with a center of a base station antenna panel as an origin, and base station antenna coordinates are constructed.

The phase difference Vm,n in the three-dimensional subspace is calculated according to the base station antenna coordinates, to obtain the steering vector in the three-dimensional subspace:

$$a(\theta, \varphi) = \{v_{1,1}, v_{2,1}, ..., v_{M,1}, v_{1,2}, v_{2,2}, ..., v_{M,2}, ... ..., v_{1,N}, v_{2,N}, ..., v_{M,N}\}$$

where, the phase difference is calculated by the following formula:

$$v_{m,n}(\theta, \varphi) = \exp\left[j\frac{2\pi d(\theta,\varphi)}{\lambda}\right]$$

$$= \exp\left[j\frac{2\pi}{\lambda}(\cos(\theta)(m-1)dV + \sin(\theta)\sin(\varphi)(n-1)dH)\right]$$

where $d(\theta, \varphi)$ represents a wave path difference, and j represents an imaginary unit (for example, a number in a form of z=a+b*j is called a complex number, where a is called as a real part, b is called as an imaginary part, and j is called as the imaginary unit); $\lambda$ represents a wavelength, dH represents a sub-spacing of horizontal array elements, dV represents a sub-spacing of vertical array elements, n represents a number of columns of an antenna array, and m represents a number of rows of the antenna array.

In a specific example, the position determination module 604 is specifically configured to determine the signal interference position according to acquired horizontal angle and vertical angle of the three-dimensional subspace.

In a specific example, the position determination module 604 is specifically configured to move a preset distance in a direction of the acquired three-dimensional subspace and determine whether the moving direction is correct according to whether the energy of the resource block in the three-dimensional subspace increases after moving. In response to the moving direction being correct, a current position is recorded as an optimal signal interference position, and the position determination module is continually moved by a preset distance in the moving direction, and a process of determining whether the moving direction is correct according to whether the energy of the resource block in the three-dimensional subspace increases after moving is repeated. In response to the moving direction being incorrect, the moving direction is adjusted, and the process of determining whether the moving direction is correct according to whether the energy of the resource block in the three-dimensional subspace increases after the movement is repeated. The recorded optimal signal interference position is taken as the signal interference position.

In a specific example, adjustment times of the moving direction are accumulated after each adjustment of the moving direction. Accumulated adjustment times are cleared to zero in response to it is determined that the moving direction is correct. In response to the accumulated adjustment times reaching a preset adjustment threshold, an optimal signal interference position last recorded is taken as the signal interference position.

In a specific example, the three-dimensional subspace obtaining module 603 is specifically configured to correlate a channel with the steering vector according to pre-stored steering vectors of the three-dimensional subspaces, to obtain energy received in each of the three-dimensional subspaces. Matching is performed on the energy received in each of the three-dimensional subspaces and the energy greater than the preset threshold. A three-dimensional subspace corresponding to energy matched with the energy greater than the preset threshold is taken as the three-dimensional subspace corresponding to the energy greater than the preset threshold.

It is not difficult to find that this embodiment is an apparatus embodiment corresponding to the first or second embodiment, and this embodiment may be implemented in cooperation with the first or second embodiment. The relevant technical details mentioned in the first or second embodiment are still applicable in this embodiment, and are not repeated here in order to avoid repetition. Correspondingly, the relevant technical details mentioned in this embodiment may also be applied to the first or second embodiment.

It is noted that each module involved in this embodiment is a logical module. In practical applications, a logical unit may be a physical unit, a part of the physical unit, or a combination of multiple physical units. In addition, in order to highlight the innovative part of the present disclosure, this embodiment does not introduce units that are not closely related to solving the technical problem raised by the present disclosure, but this does not mean that there are no other units in this embodiment.

A fourth embodiment of the present disclosure relates to an electronic device, as shown in FIG. 7, including at least one processor; and a memory commutatively connected with the at least one processor; where the memory stores instructions executable by the at least one processor, the at least one processor performs, when executing the instructions, the operations of the method for identifying the signal interference position as described above.

The memory and the processor are connected by a bus, and the bus may include any number of interconnected buses and bridges, and the bus connects one or more processors and various circuits of the memory. The bus may also connect together various other circuits, such as peripherals, voltage regulators, and power management circuits, which are well known in the art and therefore will not be described further herein. A bus interface provides an interface between the bus and a transceiver. The transceiver may be a single element or multiple elements, such as multiple receivers and transmitters, providing a unit for communicating with various other devices over a transmission medium. Data processed by the processor is transmitted on a wireless medium through an antenna, and further, the antenna also receives the data and transmits the data to the processor.

The processor is responsible for managing the bus and general processing, and may also provide various functions, including timing, a peripheral interface, voltage regulation, power management, and other control functions. The memory may be used to store data used by the processor in performing operations.

A fifth embodiment of the present disclosure relates to a computer-readable storage medium storing a computer program that, when executed by a processor, causes the processor to implement the above method embodiments.

That is, those skilled in the art may understand that all or part of the operations for implementing the above method embodiments may be completed by instructing the relevant hardware through a program, and the program is stored in a storage medium and includes several instructions to make a device (which may be a single chip microcomputer, a chip, etc.) or a processor to execute all or part of the operations of the methods described in the various embodiments of the present disclosure. The aforementioned storage medium includes: a U disk, a mobile hard disk, a read-only memory (ROM), a random access memory (RAM), a magnetic disk or an optical disk and other mediums that may store program codes.

Those of ordinary skill in the art may understand that the above-mentioned embodiments are specific examples for realizing the present disclosure, and in practical applications, various changes may be made in form and details without departing from the spirit and scope of the present disclosure.

**Claims**

1. A method for identifying a signal interference position, comprising:

   acquiring energy of a resource block detected in each of three-dimensional subspaces respectively, wherein the three-dimensional subspaces are obtained by dividing a three-dimensional space in advance;
   detecting whether there is energy greater than a preset threshold among acquired energy;
   in response to there being the energy greater than the preset threshold, acquiring a three-dimensional subspace corresponding to the energy greater than the preset threshold;
   determining a signal interference position according to acquired three-dimensional subspace.

2. The method for identifying the signal interference position according to claim 1, wherein acquiring the energy of the resource block detected in each of the three-dimensional subspaces respectively comprises: calculating a power of the resource block detected in each of the three-dimensional subspaces respectively, according to the following formula:

$$CorVal(\theta,\varphi,rbIdx) = abs(a*NI^*)^2 = abs\left(\sum_{antidx=1}^{antNum} a^*_{(\varphi,\theta,antidx)} \bullet NI_{(rbIdx,antidx)}\right)^2$$

   wherein *rbIdx* represents a resource block index, $\theta$ represents a vertical angle index, $\varphi$ represents a horizontal angle index, NI represents a noise sequence of the resource block, antidx represents an antenna index, antNum represents a total number of antennas, and a represents a steering vector of a three-dimensional subspace.

3. The method for identifying the signal interference position according to claim 2, wherein the steering vector of a three-dimensional subspace is obtained in the following manner:

   constructing a three-dimensional coordinate system with a center of a base station antenna panel as an origin, and constructing base station antenna coordinates;
   calculating a phase difference Vm,n in each of the three-dimensional subspaces according to the base station antenna coordinates to obtain respective steering vector in each of the three-dimensional subspaces:

$$a(\theta,\varphi) = \{v_{1,1}, v_{2,1}, \ldots, v_{M,1}, v_{1,2}, v_{2,2}, \ldots, v_{M,2}, \ldots\ldots, v_{1,N}, v_{2,N}, \ldots, v_{M,N}\}$$

   wherein a calculation formula of the phase difference is as follows:

$$v_{m,n}(\theta,\varphi) = \exp\left[j\frac{2\pi d(\theta,\varphi)}{\lambda}\right]$$

EP 4 024 733 A1

$$= \exp\left[j\frac{2\pi}{\lambda}(\cos(\theta)\,(m-1)dV + \sin(\theta)\sin(\varphi)\,(n-1)dH)\right]$$

wherein $d(\theta, \varphi)$ represents a wave path difference, and j represents an imaginary unit; $\lambda$ represents a wavelength, dH represents a sub-spacing of horizontal array elements, dV represents a sub-spacing of vertical array elements, and n represents a number of columns of an antenna array , m represents a number of rows of the antenna array.

4. The method for identifying the signal interference position according to claim 1, wherein determining the signal interference position according to the acquired three-dimensional subspace comprises:
determining the signal interference position according to a horizontal angle and a vertical angle of the acquired three-dimensional subspace.

5. The method for identifying the signal interference position according to claim 1, wherein determining the signal interference position according to the acquired three-dimensional subspace comprises:

moving a signal-receiving source a preset distance in a direction of the acquired three-dimensional subspace;
determining whether a moving direction is correct according to whether energy of the resource block in the acquired three-dimensional subspace increases after moving;
in response to the moving direction being correct, recording a current position as an optimal signal interference position, continuing to move the signal-receiving source the preset distance in the moving direction, and repeating the determining whether the moving direction is correct according to whether the energy of the resource block in the acquired three-dimensional subspace increases after moving;
in response to the moving direction being incorrect, adjusting the moving direction and moving the signal-receiving source, and repeating the determining whether the moving direction is correct according to whether the energy of the resource block in the acquired three-dimensional subspaces increases after moving;
taking recorded optimal signal interference position as the signal interference position.

6. The method for identifying the signal interference position according to claim 5, further comprising:

accumulating adjustment times of the moving direction after each adjustment of the moving direction;
clearing accumulated adjustment times to zero in response to determining that the moving direction is correct;
taking the recorded optimal signal interference position as the signal interference position comprises:
in response to the accumulated adjustment times reaching a preset adjustment threshold, taking an optimal signal interference position last recorded as the signal interference position.

7. The method for identifying the signal interference position according to claim 1, wherein acquiring the three-dimensional subspace corresponding to the energy greater than the preset threshold comprises:

correlating a channel with a steering vector according to pre-stored steering vectors of the three-dimensional subspaces, to obtain energy received in each of the three-dimensional subspaces;
matching obtained energy received in each of the three-dimensional subspaces with the energy greater than the preset threshold;
taking a three-dimensional subspace corresponding to energy matched with the energy greater than the preset threshold as the three-dimensional subspace corresponding to the energy greater than the preset threshold.

8. An apparatus for identifying a signal interference position, comprising:

an energy acquisition module, configured to acquire energy of a resource block detected in each of three-dimensional subspaces respectively, wherein the three-dimensional subspaces are obtained by dividing a three-dimensional space in advance;
a detection module, configured to detect whether there is energy greater than a preset threshold among acquired energy;
a three-dimensional subspace acquisition module, configured to acquire a three-dimensional subspace corresponding to the energy greater than the preset threshold in response to the energy greater than the preset threshold being detected by the detection module;
a position determination module, configured to determine a signal interference position according to acquired

11

three-dimensional subspace.

9. An electronic device, comprising:

at least one processor; and,
a memory communicatively connected with the at least one processor; wherein,
the memory stores instructions executable by the at least one processor, and the at least one processor implements, when executing the instructions, the method for identifying the signal interference position according to any one of claims 1 to 7.

10. A computer-readable storage medium storing a computer program that, when executed by a processor, causes the processor to implement the method for identifying the signal interference position according to any one of claims 1 to 7.

```
                      ┌──────────┐
                      │  Start   │
                      └────┬─────┘
                           │              101
                           ▼            ⌐
        ┌──────────────────────────────────┐
        │  Acquire energy of a resource block│
        │    detected in each of three-      │
        │  dimensional subspaces, respectively│
        └──────────────────┬─────────────────┘
                           │              102
                           ▼            ⌐
              ◇◇◇◇◇◇◇◇◇◇◇◇◇◇◇◇◇◇◇◇◇◇◇
          ◇◇ Detect whether there is energy ◇◇      No
        ◇◇  greater than a preset threshold among    ◇◇──────┐
          ◇◇        acquired energy?        ◇◇               │
              ◇◇◇◇◇◇◇◇◇◇◇◇◇◇◇◇◇◇◇◇◇◇◇                         │
                  Yes      │              103                │
                           ▼            ⌐                    │
        ┌──────────────────────────────────┐                │
        │    Acquire a three-dimensional     │                │
        │  subspace corresponding to the energy│               │
        │   greater than the preset threshold │                │
        └──────────────────┬─────────────────┘  104           │
                           │                   ⌐              │
        ┌──────────────────────────────────┐                │
        │   Determine a signal interference  │                │
        │  position according to a horizontal │                │
        │  angle and a vertical angle of acquired│              │
        │     three-dimensional subspace      │                │
        └──────────────────┬─────────────────┘                │
                           │◄─────────────────────────────────┘
                           ▼
                      ┌──────────┐
                      │   End    │
                      └──────────┘
```

**FIG. 1**

**FIG. 2**

Point A

Point B

Point A

Point B

Single antenna

Two-element antenna array

**FIG. 3**

| 1 | 2 | 9 | 10 | 17 | 18 | 25 | 26 | 33 | 34 | 41 | 42 | 49 | 50 | 57 | 58 |
| 3 | 4 | 11 | 12 | 19 | 20 | 27 | 28 | 35 | 36 | 43 | 44 | 51 | 52 | 59 | 60 |
| 5 | 6 | 13 | 14 | 21 | 22 | 29 | 30 | 37 | 38 | 45 | 46 | 53 | 54 | 61 | 62 |
| 7 | 8 | 15 | 16 | 23 | 24 | 31 | 32 | 39 | 40 | 47 | 48 | 55 | 56 | 63 | 64 |

**FIG. 4**

```
                        ┌─────────┐
                        │  Start  │
                        └────┬────┘
                             │            501
              ┌──────────────▼──────────────┐
              │  Acquire energy of a resource │
              │  block detected in each of three-
              │  dimensional subspaces,
              │  respectively
              └──────────────┬──────────────┘
                             │            502
                      ◇──────▼──────◇
              Detect whether there is energy greater ───── No ──────┐
                    than a preset threshold?                        │
                      ◇─────────────◇                               │
                             │ Yes          503                     │
              ┌──────────────▼──────────────┐                       │
              │  Acquire a three-dimensional │                      │
              │  subspace corresponding to the
              │  energy greater than the preset
              │  threshold                   504
              ├──────────────┬──────────────┤                       │
              │  Determine a moving direction │                     │
              │  according to acquired horizontal
              │  angle and vertical angle
              │  information                 505
              ├──────────────┬──────────────┤                       │
              │  Move a distance in the moving │                    │
              │  direction                   │                      │
              └──────────────┬──────────────┘                       │
```

Determine whether energy of an interference signal is enhanced — 506

Yes / No

Continue to move a preset distance, and clear adjustment times to zero — 507

Record a current position as an optimal signal interference position — 508

Determine whether the adjustment times reach a preset adjustment threshold? — 509

Accumulate adjustment times on the moving direction — 510

Adjust the moving direction and move the preset distance in an adjusted direction — 511

Accumulate adjustment times on the moving direction — 512

End

**FIG. 5**

601

Energy acquisition module

602

Detection module

603

Three-dimensional subspace acquisition module

604

Position determination module

**FIG. 6**

Memory

Processor

**FIG. 7**

## INTERNATIONAL SEARCH REPORT

| | International application No. |
| --- | --- |
| | **PCT/CN2020/107892** |

| A. | CLASSIFICATION OF SUBJECT MATTER |
| --- | --- |

H04B 17/30(2015.01)i;   H04W 24/02(2009.01)i

According to International Patent Classification (IPC) or to both national classification and IPC

| B. | FIELDS SEARCHED |
| --- | --- |

Minimum documentation searched (classification system followed by classification symbols)

H04B; H04W; H04Q; H04L

Documentation searched other than minimum documentation to the extent that such documents are included in the fields searched

Electronic data base consulted during the international search (name of data base and, where practicable, search terms used)

CNPAT, CNKI, WPI, EPODOC: 信号, 干扰, 位置, 方位, 三维, 子空间, 能量, 资源块, 门限, 大于, 阈值, 阀值, 预设, 是否, 检测, signal, interference, location, postion, three dimensional space, energy, resource, block, threshold, detection, than

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 105407063 A (SAMSUNG ELECTRONICS CO., LTD.) 16 March 2016 (2016-03-16) description, paragraphs [0085]-[0162] | 1, 4, 7-10 |
| A | CN 105407063 A (SAMSUNG ELECTRONICS CO., LTD.) 16 March 2016 (2016-03-16) description, paragraphs [0085]-[0162] | 2-3, 5-6 |
| A | CN 104052700 A (BEIJING INNOFIDEI TECHNOLOGY CO., LTD.) 17 September 2014 (2014-09-17) entire document | 1-10 |
| A | CN 107229044 A (INSTITUTE OF ACOUSTICS, CHINESE ACADEMY OF SCIENCES) 03 October 2017 (2017-10-03) entire document | 1-10 |
| A | JP 6032469 B2 (TOKYO INDUSTRY TECHNOLOGY NATIONAL UNIVERSITY CORPORATION et al.) 30 November 2016 (2016-11-30) entire document | 1-10 |

☐ Further documents are listed in the continuation of Box C.      ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **19 October 2020** | **28 October 2020** |

| Name and mailing address of the ISA/CN | Authorized officer |
| --- | --- |
| **China National Intellectual Property Administration (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/107892**

| Patent document cited in search report | | | Publication date (day/month/year) | Patent family member(s) | | | Publication date (day/month/year) |
|---|---|---|---|---|---|---|---|
| CN | 105407063 | A | 16 March 2016 | KR | 20160030442 | A | 18 March 2016 |
| | | | | US | 2016073415 | A1 | 10 March 2016 |
| | | | | EP | 3195543 | A1 | 26 July 2017 |
| | | | | WO | 2016039560 | A1 | 17 March 2016 |
| | | | | IN | 201737003013 | A | 12 May 2017 |
| CN | 104052700 | A | 17 September 2014 | None | | | |
| CN | 107229044 | A | 03 October 2017 | None | | | |
| JP | 6032469 | B2 | 30 November 2016 | JP | 2014016291 | A | 30 January 2014 |

Form PCT/ISA/210 (patent family annex) (January 2015)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910904197